# DEMANDE DE BREVET EUROPEEN

(11) **EP 1 524 851 A1**
(43) Date de publication de la demande: **20.04.2005**
(21) Numéro de dépôt: 04292371.4
(22) Date de dépôt: 06.10.2004
(51) Int. Cl.: H04N 5/74, G03B 21/10

(54) **Appareil de télévision à projection par l'arrière, et procédé pour sa production**

(30) Priorité: 17.10.2003 FR 0312157
(71) Demandeur: Sagem SA, 75015 Paris (FR)
(72) Inventeur: Poggi, Philippe, 75016 Paris (FR)
(74) Mandataire: Loisel, Bertrand

(57) **Abrégé**

L'appareil comprend deux sous-ensembles assemblés. Le premier sous-ensemble (3) comporte une structure de support (1) pourvue d'une interface pour l'assemblage avec le second sous-ensemble, une source lumineuse (5), un moteur optique (6) ayant une entrée de signal vidéo pour former un faisceau image à partir de la lumière issue de la source et du signal vidéo, un objectif (7) pour la projection du faisceau image et des moyens (15) de réglage spatial du faisceau image relativement à la structure de support. Le second sous-ensemble (4) délimite en lui-même un volume sensiblement étanche à la poussière formant chambre de projection (2). Il comporte une interface complémentaire de l'interface de la structure de support, une fenêtre (24) placée en regard de l'objectif pour l'entrée du faisceau image dans la chambre, un écran transparent placé suivant la face avant de la chambre et un miroir unique (21) renvoyant vers l'écran le faisceau image entré par la fenêtre.

## Description

La présente invention concerne les appareils de télévision à projection par l'arrière. Elle s'applique notamment aux appareils utilisant la technologie DLP ("Digital Light Processing", traitement numérique de lumière) pour générer la modulation optique d'un faisceau lumineux à projeter.

Un poste de télévision à projection par l'arrière comporte une chambre de projection dont la face avant forme un écran sur lequel les utilisateurs visualisent l'image projetée. A l'arrière de la chambre, un miroir trapézoïdal est disposé obliquement pour réfléchir la lumière en direction de l'écran. En général, cette lumière provient d'un ou plusieurs autres miroirs disposés dans la chambre de projection et recevant un faisceau incident produit par un moteur optique.

Dans le cas de la technologie DLP, le moteur optique comporte une matrice de réflecteurs élémentaires orientables appelée DMD ("Digital Micromirror Device", dispositif numérique à micromiroirs), chaque réflecteur étant commandé en fonction de l'intensité lumineuse d'un pixel correspondant de l'image à projeter.

Pour ne pas avoir un encombrement trop important, les appareils à projection par l'arrière ont des optiques à facteur d'agrandissement relativement élevés, de sorte que des réglages mécaniques très précis du moteur optique et des miroirs de renvoi doivent être effectués pour bien positionner l'image projetée sur l'écran et pour éviter qu'elle présente des distorsions. Ces réglages sont normalement effectués en usine après assemblage de l'appareil, ou sur site par un technicien spécialisé.

Des exemples d'appareils à projection par l'arrière sont décrits dans EP-A-0 126 018 ou dans US-A-2003/0133083. Ces deux documents préconisent de rendre étanche le volume de la chambre de projection pour minimiser la contamination des surfaces des miroirs.

Si on souhaite obtenir une chambre de projection hermétiquement fermée et dépourvue d'impuretés susceptibles de détériorer la qualité de l'image projetée, on est généralement amené à effectuer les réglages de positionnement en salle blanche, ce qui suppose que l'ensemble de l'appareil ait été construit dans cet environnement. Or le recours à des salles blanches sur des sites industriels augmente sensiblement le coût de production des appareils.

Dans EP-A-0 126 018, la chambre de projection hermétiquement fermée contient trois miroirs et constitue la plus grande partie de la structure de l'appareil, en incorporant notamment la base de support de l'ensemble, dans laquelle un projecteur vient s'insérer au moyen d'un tiroir amovible. Un tel agencement peut difficilement procurer une grande précision d'image, telle que celle souhaitée dans les applications de télévision à haute résolution. Il faut en outre accéder à l'intérieur de la chambre pour positionner finement les miroirs, de sorte que les réglages sont à effectuer en salle blanche.

Dans US-A-2003/0133083, la chambre de projection comporte une membrane élastique perforée qui s'engage autour de la partie frontale du moteur optique pour réaliser l'étanchéité de la chambre. Celle-ci n'est donc étanche qu'à partir du moment où elle a été assemblée sur le moteur optique. Ceci n'empêche pas la contamination de l'intérieur de la chambre au cours du processus industriel de fabrication de l'appareil, notamment au cours du réglage du positionnement relatif des miroirs présents dans la chambre, à moins de nouveau que ce réglage soit effectué en salle blanche. Il est à noter qu'il serait illusoire, dans une enceinte dont les dimensions sont typiquement de l'ordre du mètre, de compter sur des tolérances quant au positionnement relatif des miroirs ayant la précision requise par l'appareillage optique.

D'autres exemples d'appareils dans lesquels la chambre de projection ne devient étanche à la poussière qu'une fois qu'elle est assemblée avec la base de l'appareil sont décrits dans US2002/0167618, WO 03/003877 et EP-A-0 766 465.

Un but de la présente invention est de proposer une architecture d'appareil à projection par l'arrière qui en réduise le coût de production sans sacrifice quant à la qualité d'image.

L'invention propose ainsi un appareil de télévision à projection par l'arrière tel que défini dans la revendication 1.

L'architecture modulaire de cet appareil présente divers avantages. Le second sous-ensemble constitue en lui-même une chambre de projection qui pourra être rendue étanche à la poussière dans un environnement industriel propre (salle blanche) et qui pourra ensuite être manipulé avec moins de précautions. Il n'est plus nécessaire de construire l'autre sous-ensemble ou d'effectuer l'assemblage ou les réglages dans un tel environnement. Il en résulte une économie substantielle à la fabrication.

Comme la chambre de projection ne comporte qu'un seul miroir entre la fenêtre d'entrée de la lumière et l'écran, il n'est pas nécessaire d'effectuer à l'intérieur de la chambre un réglage de positionnement relatif fin entre plusieurs miroirs, de sorte que le réglage effectué après assemblage de l'appareil ne requiert pas d'intervention à l'intérieur de la chambre de projection.

Un autre aspect de la présente invention se rapporte à un procédé de production d'un appareil de télévision tel que défini dans la revendication 2.

D'autres particularités et avantages de la présente invention apparaîtront dans la description ci-après d'exemples de réalisation non limitatifs, en référence aux dessins annexés, dans lesquels :
- la figure 1 est un schéma en perspective d'un appareil de télévision selon l'invention;
- la figure 2 est un schéma en perspective du même appareil avant assemblage des deux sous-ensembles qui le composent;
- la figure 3 est un schéma des éléments optiques du sous-ensemble formant la base de l'appareil;
- la figure 4 est un schéma en coupe de l'appareil assemblé, vu de côté; et
- la figure 5 est une vue latérale en coupe du sous-ensemble formant la chambre de projection de l'appareil.

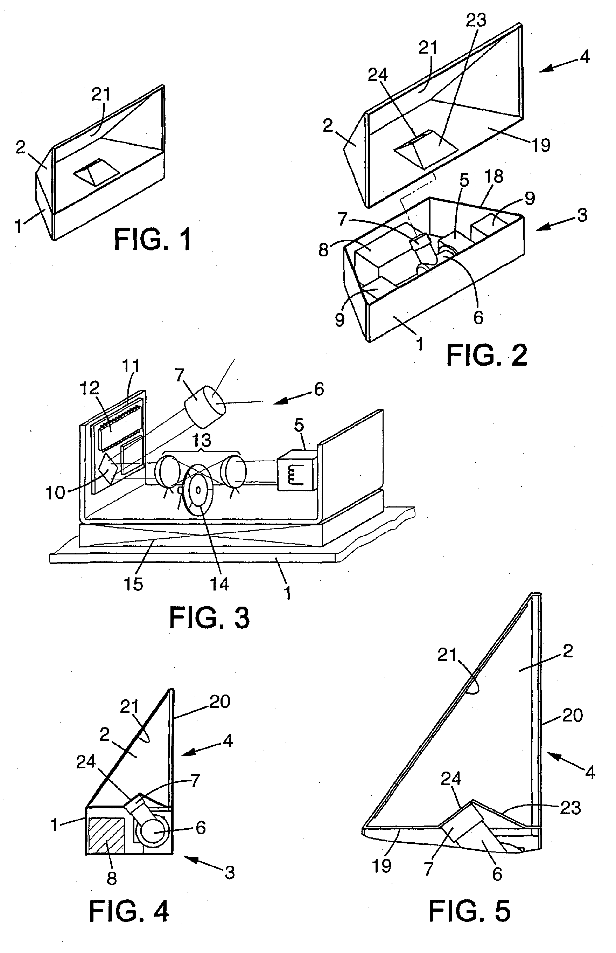

Un appareil de télévision selon l'invention comporte une structure de support 1 située sous une chambre de projection 2 (figure 1 ). La structure de support 1 appartient à un premier sous-ensemble 3 formant la base de l'appareil, tandis que la chambre de projection 2 appartient à un second sous-ensemble 4 (figure 2).

Outre la structure de support 1, le sous-ensemble de base 3 incorpore les éléments suivants:
- une source lumineuse 5;
- un moteur optique 6 qui forme un faisceau image à partir de la lumière reçue de la source 5 sur la base d'un signal vidéo fourni à une entrée de ce moteur optique;
- un objectif ou lentille de projection 7 recevant le faisceau image provenant du moteur optique 6, et l'agrandissant dans un facteur dépendant de la dimension de l'écran de projection;
- un ensemble de circuits électroniques 8 servant à adresser le signal vidéo à l'entrée du moteur optique 6. Ce signal vidéo peut provenir d'origines diverses, les circuits électroniques 8 étant adaptés en conséquence de façon connue. La circuiterie 8 peut notamment comporter un tuner et/ou un ou plusieurs décodeurs ou transcodeurs vidéo et/ou un ou plusieurs lecteurs de supports d'enregistrement (bande magnétique, disque, ...).

Dans la réalisation illustrée par la figure 3, le moteur optique 6 est de type DLP, et il reçoit donc un signal vidéo numérique de la part de la circuiterie 8. De façon connue, un tel moteur optique comprend une matrice DMD 10 montée sur une carte de circuit imprimé 11. Cette carte 11 porte en outre un processeur de signal numérique 12 qui traite le signal vidéo reçu pour commander individuellement les micromiroirs de la matrice 10, qui définissent les pixels de l'image projetée. Cette matrice DMD 10 est illuminée par de la lumière issue de la source 5 à travers une optique d'entrée 13 qui, dans l'exemple représenté sur la figure 3, incorpore un disque chromatique 14. La source 5 délivre alors une lumière blanche, et la rotation du disque 14, dont la périphérie est munie de filtres rouge, vert et bleu agencés par secteurs angulaires de 120°, ce qui permet de projeter alternativement les trois couleurs de base sur la matrice de microréflecteurs 10. La commande électronique de ces microréflecteurs par le processeur 12, en synchronisme avec la rotation du disque chromatique 14, définit alors la luminance de chaque pixel de l'image suivant les trois composantes colorées conformément au signal vidéo d'entrée. L'image réfléchie par le dispositif DMD 10 est adressée, directement ou indirectement, à la lentille de projection 7.

La figure 3 montre également, de façon schématique, la monture 15 du moteur optique 6 qui présente des capacités de réglage mécanique permettant de positionner le moteur optique et ses différents composants par rapport à la structure de support 1. Les réglages de positionnement nécessaires incluent des réglages en translation suivant les trois directions de l'espace, ainsi que des réglages en rotation autour de trois directions mutuellement perpendiculaires. De façon classique, ces réglages sont effectués au moyen par exemple de vis de réglage fin appartenant à la monture 15.

Le sous-ensemble de base 3 peut en outre incorporer un certain nombre d'éléments supplémentaires tels que par exemple des haut-parleurs 9, un panneau de commande pour l'utilisateur (non représenté), un récepteur de télécommande (non représenté), etc.

La partie supérieure 18 de la structure de support 1 constitue une interface mécanique destinée à recevoir le sous-ensemble 4 formant la chambre de projection 2. La face inférieure 19 de ce sous-ensemble 4 présente une interface complémentaire permettant d'assembler les deux sous-ensembles entre eux. Cet assemblage peut être réalisé selon tout mode approprié, par exemple, par clipsage, par emboîtement, par vissage, etc.

Le sous-ensemble 4 formant la chambre de projection 2 comporte un écran transparent 20 prévu pour s'étendre suivant la face avant de l'appareil. Cet écran 20 n'est pas représenté sur les figures 1 et 2 pour montrer l'intérieur de la chambre 2. Comme il est usuel dans ce genre d'appareil, l'écran 20 constitue une lentille de Fresnel à travers laquelle les utilisateurs visualiseront l'image projetée. Le faisceau image provenant de l'objectif 7 atteint l'écran 20 à l'intérieur de la chambre de projection 2 en se réfléchissant sur un unique miroir trapézoïdal 21 monté obliquement à l'arrière de la chambre.

Conformément à l'invention, le sous-ensemble 4 est construit pour constituer une chambre de projection 2 entièrement étanche à la poussière, y compris lorsque ce sous-ensemble 4 est séparé de l'autre sous-ensemble 3 formant la base de l'appareil. Ainsi, on peut fabriquer le sous-ensemble 4 dans un environnement industriel propre, tel qu'une salle blanche, puis le stocker et le manipuler dans d'autres environnements sans risquer la contamination du volume interne de la chambre.

La partie inférieure du sous-ensemble 4 est constituée par une paroi 19 qui ferme la chambre 2. Dans l'exemple représenté, cette paroi 19 présente un renfoncement 23 pour accommoder l'objectif 7 du moteur optique. Face au miroir oblique 21, le renfoncement 23 comporte une fenêtre transparente 24 à travers laquelle le faisceau image pénètre dans la chambre de projection 2.

Comme la chambre de projection 2 comporte un unique miroir de renvoi 21, le réglage de positionnement de l'image sur l'écran 20 peut être réalisé de façon satisfaisante en positionnant et en orientant convenablement le faisceau en sortie du moteur optique 6.

Ainsi, après avoir réalisé séparément les deux sous-ensembles 3, 4 et les avoir mutuellement assemblés, on procède aux réglages mécaniques à l'aide de la monture 15 des éléments du moteur optique, par exemple à travers une trappe d'accès (non représentée) de la structure de support 1. Ce réglage peut consister à positionner de façon appropriée et sans déformation une mire de réglage projetée sur l'écran 20 par le système optique.

Le montage du sous-ensemble de base 3, son assemblage avec l'autre sous-ensemble 4 et les réglages mécaniques ci-dessus n'ont pas besoin d'être réalisés dans un environnement industriel ayant les contraintes de propreté requises pour la construction du sous-ensemble 4. Il en résulte une économie appréciable en terme de coût de production global de l'appareil.

En outre, il est possible de réaliser des sous-ensembles de base 3 dans des séries longues compatibles avec diverses tailles d'écran. On réalise alors plusieurs types de sous-ensembles 4 correspondant à des chambres de projection de volumes différents. L'augmentation de la taille d'écran suppose généralement que le miroir de renvoi 21 soit reculé par rapport à l'écran 20, avec aussi une plus grande distance par rapport à la fenêtre d'entrée 24. Il est en outre nécessaire d'adapter la distance focale de la lentille de projection 7.

Pour produire un téléviseur ayant une taille d'écran donnée (par exemple diagonale d'écran de 43 pouces, 50 pouces...), on prend un sous-ensemble de base 3 indifférencié, on y adapte une lentille de projection 7 ayant la distance focale appropriée, et on surmonte ce sous-ensemble 3 d'une chambre de projection 2 sélectionnée parmi les différentes tailles disponibles. Cette réalisation modulaire permet également de réduire le coût moyen de fabrication des appareils appartenant à toute une gamme.

## Revendications

1. Appareil de télévision à projection par l'arrière, comprenant un assemblage d'un premier sous-ensemble (3) et d'un second sous-ensemble (4), dans lequel le premier sous-ensemble comporte une structure de support (1) pourvue d'une interface (18) pour l'assemblage avec le second sous-ensemble, une source lumineuse (5), un moteur optique (6) ayant une entrée de signal vidéo pour former un faisceau image à partir de la lumière issue de la source et du signal vidéo, un objectif (7) pour la projection du faisceau image et des moyens (15) de réglage spatial du faisceau image relativement à la structure de support, et dans lequel le second sous-ensemble délimite en lui-même un volume sensiblement étanche à la poussière formant chambre de projection (2) et comporte une interface (19) complémentaire de l'interface de la structure de support, une fenêtre (24) placée en regard de l'objectif pour l'entrée du faisceau image dans la chambre, un écran transparent (20) placé suivant la face avant de la chambre et un miroir unique (21) renvoyant vers l'écran le faisceau image entré par la fenêtre.

2. Procédé de production d'un appareil de télévision, comprenant les étapes suivantes:
- construire un premier sous-ensemble (3) comportant une structure de support (1) pourvue d'une première interface d'assemblage (18), une source lumineuse (5), un moteur optique (6) ayant une entrée de signal vidéo pour former un faisceau image à partir de la lumière issue de la source et du signal vidéo, un objectif (7) pour la projection du faisceau image et des moyens (15) de réglage spatial du faisceau image relativement à la structure de support;
- se procurer un second sous-ensemble (4) ayant un volume sensiblement étanche à la poussière formant chambre de projection (2) et comportant une seconde interface d'assemblage (19) complémentaire de la première interface de la structure de support, une fenêtre (24) pour l'entrée de lumière dans la chambre, un écran transparent (20) placé suivant la face avant de la chambre et un miroir (21) renvoyant vers l'écran la lumière entrée par la fenêtre;
- assembler les premier et second sous-ensembles au moyen des première et seconde interfaces d'assemblage en plaçant la fenêtre en regard de l'objectif; et
- effectuer un réglage d'image à l'aide des moyens de réglage spatial du premier sous-ensemble.

3. Procédé selon la revendication 2, dans lequel le second sous-ensemble (4) comporte un seul miroir (21) entre la fenêtre (24) et l'écran (20).
